# EUROPEAN PATENT APPLICATION

(11) **EP 4 560 776 A2**
(43) Date of publication of application: **28.05.2025**
(21) Application number: 24214593.6
(22) Date of filing: 21.11.2024
(51) Int. Cl.: H01M 10/42, H01M 50/213, H01M 50/503, H01M 50/507

(54) **RECHARGEABLE BATTERY PACK**

(30) Priority: 24.11.2023 KR 20230166062
(71) Applicant: SAMSUNG SDI CO., LTD., Yongin-si, Gyeonggi-do 17084 (KR)
(72) Inventor: Park, Sanghun, Yongin-si, Gyeonggi-do 17084 (KR)
(74) Representative: Gulde & Partner

(57) **Abstract**

A rechargeable battery pack including a holder with a plurality of accommodation spaces formed inside, a plurality of unit battery cells inserted into the plurality of accommodation spaces, a battery connection tab that electrically connects the plurality of unit battery cells in the holder, a plurality of busbar connection tabs that are coupled to upper and lower edges of the holder and are electrically connected to a portion of the plurality of unit battery cells, and include a fixing piece protruded from and bent to a side surface of the holder, a busbar that is electrically connected to the fixing piece of the busbar connection tab and including a connection protrusion that extends while being curved to an upper portion of the holder, and a BMS circuit installed in the upper portion of the holder and electrically connected to the connection protrusion.

## Description

### BACKGROUND

### 1. Field

A rechargeable battery pack is provided that enables stable electrical connection between a busbar and a BMS circuit and has improved durability.

### 2. Description of the Related Art

In general, a rechargeable battery capable of being repeatedly charged and discharged is widely used as a battery, which may be a power for a wireless mobile device. The battery may also attract attention as a power source for an electric vehicle (EV) and a hybrid electric vehicle (HEV), which are being proposed as potential solutions to air pollution from conventional gasoline or diesel vehicles that use fossil fuel.

When a battery performs charge and discharge alternately, it may be necessary to efficiently control the charge and discharge of the battery to maintain the appropriate operating state and performance. For this reason, a battery management system (BMS) that manages the status and performance of the battery may be provided in the battery pack. The BMS may manage the battery by measuring a current, a voltage, and a temperature of the battery and recording the measured value in a memory.

The BMS may be electrically connected to the battery in a rechargeable battery pack by a busbar and may manage the status and performance of the battery. When connecting the BMS and the busbar, a part of the busbar may be bent and electrically connected to the BMS.

However, a first position where the bent part of the busbar electrically connects to the BMS and a second position to which a tab where the busbar is connected with the battery cell is connected may be unstable, and thus there may be a problem that the electrical connection may not be stable and the durability may be deteriorated.

### SUMMARY

In an embodiment, a rechargeable battery pack that enables stable electrical connection between a busbar and a BMS circuit and has improved durability is provided.

In an embodiment, a rechargeable battery pack is provided in which a portion where a connection tab is connected, e.g. welded, to the battery cell and a portion where the connection tab is connected, e.g. welded, to a busbar are separated into upper and side positions of a holder, respectively, thereby enabling stable electrical connection between a BMS circuit and the busbar.

Embodiments are directed to a rechargeable battery pack including a holder with a plurality of accommodation spaces formed inside, a plurality of unit battery cells inserted into the plurality of accommodation spaces, a battery connection tab that may electrically connect the plurality of unit battery cells in the holder, a plurality of busbar connection tabs that may couple upper and lower edges of the holder and may be electrically connected to a portion of the plurality of unit battery cells, and may include a fixing piece protruded from and bent to a side surface of the holder, a busbar that may electrically connect to the fixing piece of the busbar connection tab and may include a connection protrusion that extends while being curved to an upper portion of the holder, and a BMS circuit installed in the upper portion of the holder and electrically connected to the connection protrusion.

An implementation may include the battery connection tab including a plurality of first connection tabs that electrically connect upper portions of the plurality of unit battery cells at the upper portion of the holder, and a plurality of second connection tabs that electrically connect lower portions of the plurality of unit battery cells at a lower portion of the holder.

An implementation may include the holder including a first holder in which a plurality of first accommodation spaces accommodating a part of the unit battery cell are accommodated are formed, and wherein the first connection tab is installed at the bottom, and a second holder installed in the upper portion of the first holder, and in which a plurality of second accommodation spaces accommodating the other portion of the unit cell is accommodated are formed and wherein the second connection tab is installed on an upper portion.

An implementation may include a first plurality of insertion grooves into which the fixing piece of the busbar connection tab is inserted and fixed is formed on a side surface of the first holder, the first plurality of insertion grooves being formed along a first direction on the side surface of the first holder.

An implementation may include a plurality of second insertion grooves into which the fixing piece of the busbar connection tab is inserted and fixed are formed on a side surface of the second holder, and the second plurality of insertion grooves are formed in plurality along the first direction on the side surface of the second holder.

An implementation may include the first connection tab including a plurality of first tab plates at the bottom of the first holder, and a plurality of first tab protrusions that protrude at the edge of the first tab plate and electrically connect to the unit battery cell, the second connection tab including a plurality of second tab plates above the second holder, and a plurality of second tab protrusions which protrude at the edge of the second tab plate and electrically connect to the unit battery cell.

An implementation may include the busbar connection tab including a third connection tab that is electrically connected to the plurality of unit battery cells at a lower edge of the first holder, and partially extends and is electrically connected to the BMS circuit, and a fourth connection tab that is electrically connected to the plurality of unit battery cells at an upper edge of the second holder, and partially extends and is electrically connected to the BMS circuit.

An implementation may include the third connection tab including a third tab plate on the lower edge of the first holder, a plurality of third tab protrusions which protrude on one edge of the third tab plate and electrically connect to the unit battery cell, and a first fixing piece that is bent from the other edges of the plurality of third tab plates to the side surface direction of the first holder and is inserted into the plurality of the first insertion grooves to form a first fixing hole fixed by a fastening member, and a first guiding piece that is in surface contact with the side surface of the first holder and which protrudes from one edge of the third plate.

An implementation may include the fourth connection tab including a fourth tab plate on an upper edge of the second holder, a plurality of fourth tab protrusions which protrude on one edge of the fourth tab plate and electrically connect to the unit battery cell, a second fixing piece that is bent from the other edge of the fourth tab plate to the side surface direction of the second holder and which is inserted into the plurality of the second insertion grooves to form a second fixing hole fixed by a fastening member, and a second guiding piece that is in surface contact with the side surface of the first holder and which protrudes from one edge of the fourth plate.

An implementation may include the busbar including a first busbar electrically connecting the third connection tab and the BMS circuit, and a second busbar electrically connecting the fourth connection tab and the BMS circuit.

An implementation may include the first busbar including a curved extension portion extending in the first direction at the side surface of the first holder and which is inserted into the plurality of first insertion grooves of the first holder and formed in a part of the first busbar.

An implementation may include a first fastening hole that communicates with the first fixing hole and which is fixed to the first holder with a fastening member which is formed in the curved extension portion.

An implementation may include a first connection protrusion extending upward of the second holder and being electrically connected to the BMS circuit and protruding from one edge of the first busbar.

An implementation may include the second busbar including a curved portion that extends in the first direction from the side surface of the second holder and which is inserted into the second insertion groove of the second holder and is formed in a part of the surface of the second busbar.

An implementation may include a second fastening hole through which a fastening member is fixed to the second holder, and which communicates with the second fixing hole of the fourth connection tab while being inserted into the second insertion groove and is formed in a bent portion.

An implementation may include a second connection protrusion extending upward of the second holder and electrically connected to the BMS circuit protruding from one edge of the second busbar.

An implementation may include a plurality of first support portions that protrude from the upper portion of the second holder and support the BMS circuit, and a second support portion protruded on the upper portion of the second holder and supporting the BMS circuit while being connected to the second connection portion of the second busbar.

An implementation may include the plurality of first support portions protruding to the second holder and supporting the BMS circuit at a distance from the second holder.

An implementation may include the second support portion including a fastening member that passes through the BMS circuit and is fixed to the holder, and a fixing portion including a support plate in which an insertion hole into which the fastening member is inserted is formed, and a plurality of insertion protrusions which protrude at the edge of the support plate and are inserted and fixed into the BMS circuit.

An implementation may include the fastening member passing through the second connection protrusion of the second busbar and being fastened to the second holder.

### BRIEF DESCRIPTION OF THE DRAWINGS

Features will become apparent to those of skill in the art by describing in detail exemplary embodiments with reference to the attached drawings in which:
FIG. 1 is a schematic perspective view of a rechargeable battery pack according to an example embodiment.
FIG. 2 is an exploded perspective view of a main part that schematically illustrates a state in which a BMS circuit of the rechargeable battery pack in FIG. 1 is separated.
FIG. 3 schematically illustrates an exploded perspective view of the rechargeable battery pack of FIG. 1.
FIG. 4 is a schematic perspective view illustrating the third connection tab according to an example embodiment.
FIG. 5 is a perspective view of a main part schematically illustrating a part where the third tab protrusion of the third connection tab in FIG. 4 is formed.
FIG. 6 is a schematic perspective view illustrating the fourth connection tab according to an example embodiment.
FIG. 7 is a perspective view of a main part schematically illustrating a state in which the first busbar is separated from the first holder according to an embodiment.
FIG. 8 is a perspective view that schematically illustrates a state in which the first busbar of FIG. 7 is connected to the third connection tab.
FIG. 9 is a schematic perspective view illustrating a state in which the second busbar is connected to the fourth connection tab according to an example embodiment.
FIG. 10 is a perspective view of a main part schematically illustrating a state in which the second busbar in FIG. 2 is coupled to the second holder.

### DETAILED DESCRIPTIONS

Example embodiments will now be described more fully hereinafter with reference to the accompanying drawings; however, they may be embodied in different forms and should not be construed as limited to the embodiments set forth herein. Rather, these embodiments are provided so that this disclosure will be thorough and complete, and will fully convey exemplary implementations to those skilled in the art.

In the drawing figures, the dimensions of layers and regions may be exaggerated for clarity of illustration. It will also be understood that when a layer or element is referred to as being "on" another layer or substrate, it can be directly on the other layer or substrate, or intervening layers may also be present. Further, it will be understood that when a layer is referred to as being "under" another layer, it can be directly under, and one or more intervening layers may also be present. In addition, it will also be understood that when a layer is referred to as being "between" two layers, it can be the only layer between the two layers, or one or more intervening layers may also be present. Like reference numerals refer to like elements throughout.

Hereinafter, the present disclosure will be described more fully hereinafter with reference to the accompanying drawings, in which embodiments of the invention are shown. As those skilled in the art would realize, the described embodiments may be modified in various different ways, all without departing from the scope of the present disclosure. The drawings and description are to be regarded as illustrative in nature and not restrictive. Like reference numerals designate like elements throughout the specification.

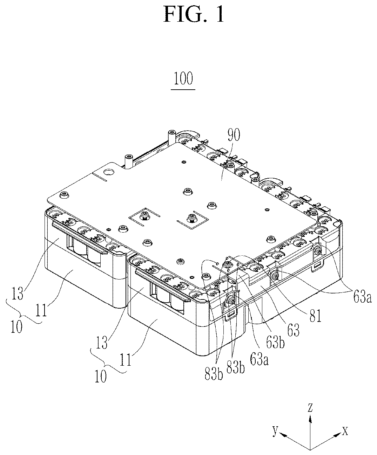

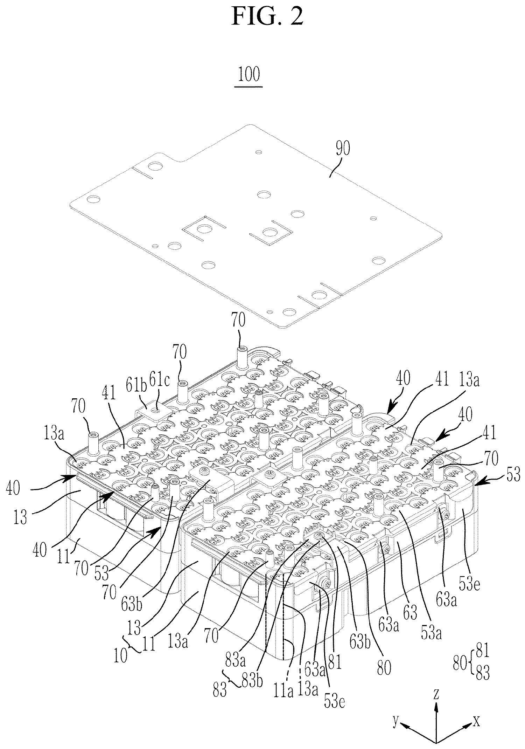

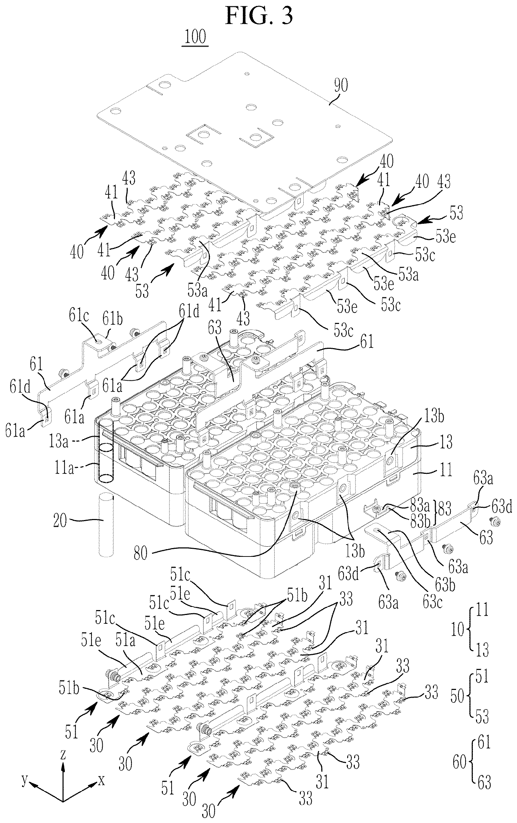

FIG. 1 is a schematic perspective view of a rechargeable battery pack according to an example embodiment. FIG. 2 is an exploded perspective view of a main part that schematically illustrates a state in which a BMS circuit of the rechargeable battery pack in FIG. 1 is separated. FIG. 3 schematically illustrates an exploded perspective view of the rechargeable battery pack of FIG. 1.

As shown in FIG. 1 to FIG. 3, a rechargeable battery pack 100 according to example embodiments may include a holder 10 in which a plurality of accommodation spaces 11a and 13a are formed, a plurality of unit battery cells 20 inserted into the plurality of accommodation spaces 11a and 13a, battery connection tabs 30 and 40 electrically connecting the plurality of unit battery cells 20 in the holder 10, a plurality of busbar connection tabs 50 electrically connected to some of the plurality of unit battery cells 20 by being coupled to upper and lower edges of the holder 10 and having protruded fixing pieces 51c and 53c bent from a side of the holder 10, a busbar 60 including connection protrusions 61b and 63b that are electrically connected to the fixing pieces 51c and 53c of the busbar connection tab 50 and extending upward of the holder 10 in a curved manner, and a BMS circuit 90 installed in an upper portion of the holder 10 and electrically connected to the connection protrusions 61b and 63b. Thus, a stable electrical connection between the busbar 60 and the BMS circuit 90 with improved durability is provided.

The plurality of accommodation spaces 11a and 13a may be formed inside the holder 10 and the plurality of unit battery cells 20 may be accommodated inside the plurality of accommodation spaces 11a and 13a.

The plurality of accommodation spaces 11a and 13a may be formed inside the holder 10 and may be formed in columns and rows for the entire area of the holder 10. Thus, the plurality of unit battery cells 20 may be inserted into the holder 10 in a plurality of columns and rows. The holder 10 may include a first holder 11 and a second holder 13 accommodating the plurality of unit battery cells 20.

In the first holder 11, a plurality of first accommodation spaces 11a may be formed, inside which parts of the unit battery cells 20 may be accommodated and the first connection tab 30 may be installed at the bottom. The first holder 11 may be formed with a plurality of columns and rows in the first accommodation space 11a such that a portion of the plurality of unit battery cells 20 may be accommodated inside.

A first insertion groove 11b into which the first fixing piece 51c is inserted and fixed may be formed on the side of the first holder 11. The first insertion groove 11b may be formed in plurality along the first direction (x-axis direction) on the side of the first holder 11, and thus the first fixing piece 51c of the third connection tab 51 constituting the busbar connection tab 50, which will be described later, may be inserted. This will be described in more detail below when the third connection tab 51 is described. Meanwhile, the battery connection tabs 30 and 40 that electrically connect the plurality of unit battery cells 20 may be installed in the holder 10.

The battery connection tabs 30 and 40 may include a plurality of first connection tabs 30 that may electrically connect upper portions of the plurality of unit battery cells 20 from the upper portion of the holder 10, and a plurality of second connection tabs 40 that may electrically connect lower portions of the plurality of unit battery cells 20 from the lower portion of the holder 10. The first connection tab 30 may be installed at the bottom of the first holder 11 and may electrically connect the plurality of unit battery cells 20.

The first connection tabs 30 may include a plurality of first tab plates 31 in the lower portion of the first holder 11 and a plurality of first tab protrusions 33 protruded from edges of the plurality of first tab plates 31 and electrically connected to the unit battery cells 20.

The plurality of first tab plates 31 may be at a distance from each other. The plurality of first tab plates 31 may be fixed to the lower portion of the first holder 11. The plurality of first tab plates 31 may be electrically connected to some of the plurality of unit battery cells 20 in the lower portion of the first holder 11. The plurality of first tab protrusions 33 may protrude at the edge of the plurality of first tab plates 31. The plurality of first tab protrusions 33 may protrude along the edge of the plurality of first tab plates 31 and may be electrically connected to the unit battery cell 20.

Alternatively, the plurality of first tab protrusions 33 may protrude on each of the opposite sides of the plurality of first tab plates 31 depending on the arranged position of the plurality of first tab plates 31, or may protrude in an edge position on either side.

The second holder 13 may be installed on the upper portion of the first holder 11, and a plurality of second accommodation spaces 13a accommodating the unit battery cells 20 together with the first holder 11 may be formed inside.

In the second holder 13, the plurality of second accommodation spaces 13a may be formed in a plurality of columns and rows such that a portion of the plurality of unit battery cells 20 may be accommodated therein.

That is, the plurality of second accommodation spaces 13a may accommodate the unit battery cell 20 by communicating with the first plurality of accommodation spaces 11a with the first and second holders 11 and 13 positioned up and down. A second insertion groove 13b may be on the side of the second holder 13 into which the second fixing piece 53c may be inserted and fixed.

The second insertion groove 13b may be formed in plurality along the first direction on the side of the second holder 13, and thus the second fixing piece 53c of the fourth connection tab 53 forming the busbar connection tab 50, which will be described later, may be inserted. This will be described in more detail below when describing a fourth connection tab 53.

The second connection tabs 40 may be installed in an upper portion of the second holder 13 and electrically connect the plurality of unit battery cells 20. The second connection tab 40 may include a plurality of second tab plates 41 on the second holder 13 and a plurality of second tab protrusions 43 protruded from edges of the plurality of second tab plates 41 and electrically connected to the unit battery cells 20.

The plurality of second tab plates 41 may be fixed to an upper portion of the second holder 13 spaced apart from each other on the second holder 13. The plurality of second tab plates 41 may be electrically connected to a portion of the plurality of unit battery cells 20 on the second holder 13. The plurality of second tab protrusions 43 may be protruded at the edges of the plurality of second tab plates 41.

The plurality of second tab protrusions 43 may protrude along the edges of the plurality of second tab plates 41 and electrically connect to the unit battery cells 20. Depending on the position of the plurality of second tab plates 41, the plurality of second tab protrusions 43 may protrude on both sides of the plurality of second tab plates 41 and may also protrude in an edge position on either side.

The aforementioned first and second connection tabs 30 and 40 may be installed on the first holder 11 and the second holder 13, respectively, and thus the plurality of unit battery cells 20 may be electrically connected to each other.

Meanwhile, the busbar connection tab 50 may be installed in the second holder 13 to connect the unit battery cell 20, which may electrically connect the first connection tab 30 and the second connection tab 40, to the busbar 60.

The busbar connection tab 50 may be coupled to the edges of the first holder 11 and the second holder 13 and may electrically connect to upper portions of the plurality of unit battery cells 20, and the first fixing piece 51c and the second fixing piece 53c may protrude from the edge of the busbar connection tab 50 while being bent from the side surfaces of the first holder 11 and the second holder 13.

More specifically, the busbar connection tab 50 may include a third connection tab 51 electrically connected to the plurality of unit battery cells 20 at the lower edge of the first holder 11 and partially extended and electrically connected to the BMS circuit 90, and a fourth connection tab 53 electrically connected to the plurality of unit battery cells 20 at the upper edge of the second holder 13 and partially extended and electrically connected to BMS circuit 90.

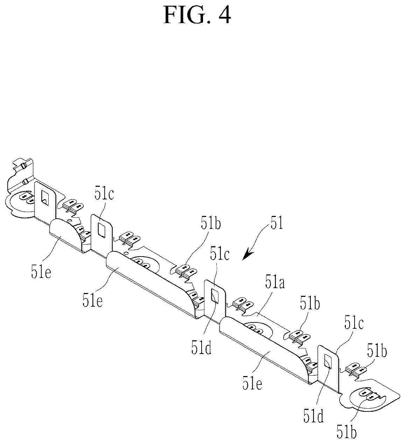

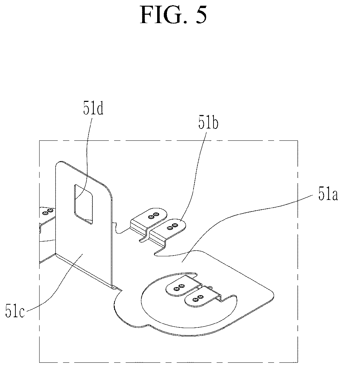

FIG. 4 is a schematic perspective view illustrating the third connection tab according to an example embodiment. FIG. 5 is a perspective view of a main part schematically illustrating a part where the third tab protrusion of the third connection tab in FIG. 4 is formed.

As shown in FIG. 4 and FIG. 5, the third connection tab 51 may include a plurality of third tab plates 51a on the lower edge of the first holder 11. A plurality of third tab protrusions 51b may protrude on one edge of the plurality of third tab plates 51a and may electrically connect to the unit battery cells. A first fixing piece 51c may be bent to a side surface direction of the first holder 11 at the other edge of the plurality of third tab plates 51a, may be inserted into the plurality of first insertion grooves 11b and may have a first fixing hole 51d fixed by a fastening member.

The plurality of third tab plates 51a may be at the edge of the first holder 11, and the plurality of third tab protrusions 51b may protrude on one side and electrically connect to the plurality of unit battery cells 20.

The first fixing piece 51c may extend in a bent state in the side surface direction of the second holder 13 and may protrude at the edge of the plurality of third tab plates 51a. The first fixing piece 51c may protrude from the edge of the plurality of third tab plates 51a and may be inserted into the first insertion groove 11b formed on the side of the first holder 11.

The first fixing piece 51c may protrude from the edge of the plurality of third tab plates 51a in a number corresponding to the plurality of first insertion grooves 11b and may be inserted into the first insertion groove 11b. The first fixing hole 51d with a slit shape may be formed in the first fixing piece 51c.

The first fixing hole 51d may fix the first connecting protrusion 61b of the busbar 60, which may be inserted with the first fixing piece 51c into the first insertion groove 11b, to the side surface of the second holder 13 by a fastening member such as a bolt member. As stable and durable fixation can be reached. Since the first fixing hole 51d may be a slit shape, the installation position of the first connection protrusion 61b may be appropriately varied when fixed using a fastening member.

Meanwhile, the first guiding piece 51e may protrude at the edge of the plurality of third tab plates 51a such that the plurality of third tab plates 51a may be stably positioned on the first holder 11. The first guiding piece 51e may be bent at the edge of the plurality of third tab plates 51a and may be bent to approximately 90° to make surface contact with the side of the first holder 11.

The first guiding piece 51e may protrude from a position between the plurality of first fixing pieces 51c at the edge of the plurality of third tab plates 51a and may make surface contact with the side of the first holder 11. Therefore, the third connection tab 51 may be stably fixed at the edge position of the first holder 11 by the guide action of the plurality of first guiding piece 51e.

The first guiding piece 51e may protrude into a round shape at the edge of the plurality of third tab plates 51a to minimize interference with adjacent parts. Meanwhile, the fourth connection tab 53 may be electrically connected to the plurality of unit battery cells 20 at the upper edge of the second holder 13, and a portion of the fourth connection tab 53 may be extended and electrically connected to the BMS circuit 90.

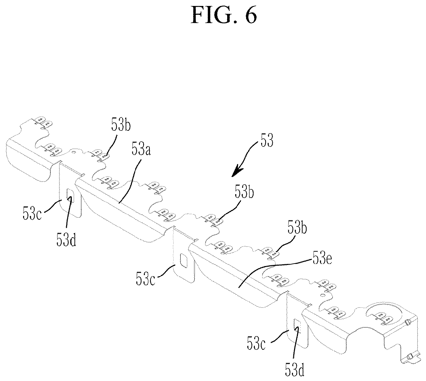

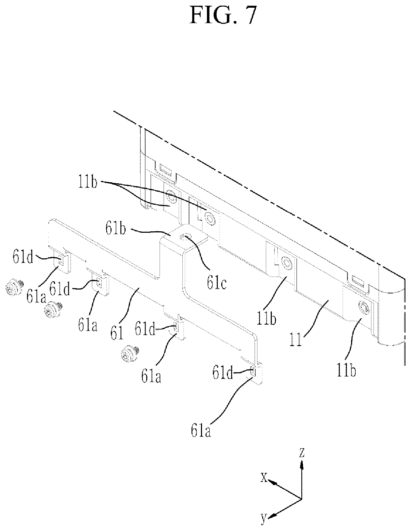

FIG. 6 is a schematic perspective view illustrating the fourth connection tab 53 according to an example embodiment. FIG. 7 is a perspective view of a main part schematically illustrating a state in which the first busbar is separated from the first holder according to an embodiment.

Referring to FIG. 6 and FIG. 7, more specifically, the fourth connection tab 53 may include a fourth tab plate 53a on the upper edge of the second holder 13, a plurality of fourth tab protrusions 53b which may protrude on one edge of the fourth tab plate 53a and electrically connect to the unit battery cells 20, and a second fixing piece 53c that may be bent from the other edge of the fourth tab plate 53a in the side surface direction of the second holder 13 and may be inserted into the plurality of second insertion grooves 13b and may have a second fixing hole 53d that may be fixed by a fastening member.

The fourth tab plate 53a may be placed at the edge of the second holder 13, and the plurality of third tab protrusions 53b may protrude on one side and may be electrically connected to the plurality of unit battery cells 20.

The second fixing piece 53c may extend in a bent state in the side surface direction of the second holder 13 and may protrude at the edge of the fourth tab plate 53a. The second fixing piece 53c may protrude from the edge of the fourth tab plate 53a and may be inserted into the first second groove 13b on the side of the second holder 13.

The second fixing piece 53c may protrude from the edge of the fourth tab plate 53a in a number corresponding to the plurality of second insertion grooves 13b and may be inserted into the second insertion groove 13b. The second fixing hole 53d with a slit shape may be formed in the second fixing piece 53c. The second fixing hole 53d may fix the second connecting protrusion 63b of the busbar 60, which is inserted with the second fixing piece 53c, into the second insertion groove 13b, to the side surface of the second holder 13 by a fastening member such as a bolt member.

Since the second fixing hole 53d may be a slit shape, the installation position of the second connection protrusion 63b may be appropriately varied when fixed using a fastening member. Meanwhile, the second guiding piece 53e may protrude at the edge of the fourth tab plate 53a such that the fourth tab plate 53a is stably positioned on the second holder 13. The second guiding piece 53e may be bent at the edge of the fourth tab plate 53a and may be bent to approximately 90° to make surface contact with the side of the second holder 13.

The second guiding piece 53e may protrude from a position between the plurality of second fixing pieces 53c at the edge of the fourth tab plate 53a and may make surface contact with the side of the second holder 13. Therefore, the fourth connection tab 53 may be stably fixed at the edge position of the second holder 13 by the guide action of the plurality of second guiding piece 53e. The second guiding piece 53e may be protruded into a round shape at the edge of the fourth tab plate 53a to minimize interference with adjacent parts.

Meanwhile, the busbar 60 may be installed in the first holder 11 and the second holder 13, respectively, and may enable the BMS circuit 90 and the battery cells 20 to be electrically connected. The busbar 60 may include a first busbar 61 electrically connecting the third connection tab 51 and the BMS circuit 90 and a second busbar 63 electrically connecting the fourth connection tab 53 and the BMS circuit 90.

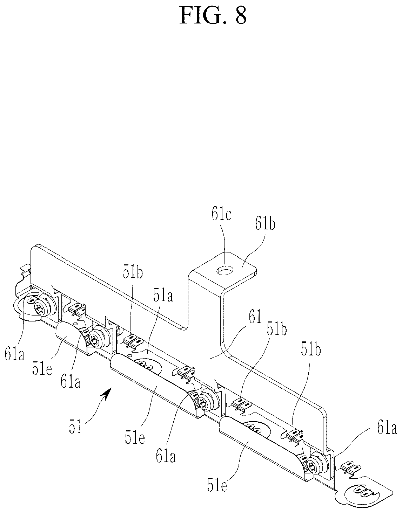

FIG. 8 is a perspective view that schematically illustrates a state in which the first busbar of FIG. 7 is connected to the third connection tab. As shown in FIG. 8, the first busbar 61 may extend in the first direction (e.g., x-axis direction) from the side surface of the first holder 11, and a curved extension portion 61a may protrude and be inserted into the plurality of first insertion grooves 1 1b of the first holder 11.

The first busbar 61 may extend to a long length along the first direction from the side surface of the first holder 11, a plurality of curved extension portions 61a may be protruded on one edge, and the first connection protrusion 61b, which may be connected to the BMS circuit 90, may be protruded on the other edge. A first fastening hole 61c may be formed in the curved extension portion 61a.

When the curved extension portion 61a is inserted into the first insertion groove 11b formed in the first holder 11, the first fastening hole 61c may be formed in the curved extension portion 61a to communicate through the first fixing hole 51d formed in the first fixing piece 51c.

Therefore, since the fastening member may pass through the first fixing hole 51d and the first fastening hole 61c and may be fastened to the first holder 11 while the curved extension portion 61a is inserted into the first insertion groove 11b and is in surface contact with the first fixing piece 51c, the curved extension portion 61a may be fixed to the second holder 13. A stable and durable fixation is reached.

The curved extension portion 61a may protrude to the edge of the first busbar 61 in the same number as the number of first insertion grooves 11b formed on the side of the first holder 11. In an implementation, the curved extension portion 61a may be inserted into the first insertion groove 11b and electrically connected to the first fixing piece 51c in a surface contact state. The first connection protrusion 61b may protrude at the edge of the first busbar 61.

The first connection protrusion 61b may have one side connected to the edge of the first busbar 61 and the other side extending in the upper direction of the second holder 13, and thus may be electrically connected to the BMS circuit 90. A stable electrical connection between the first busbar 61 and BMS circuit 90 is reached.

Meanwhile, the second busbar 63 may electrically connect the fourth connection tab 53 and the BMS circuit 90, and a portion of the length direction may be inserted into the second insertion groove 13b where the second fixing piece 53c is inserted and fixed by a fastening member.

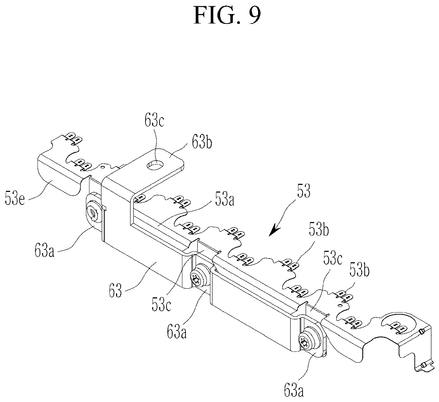

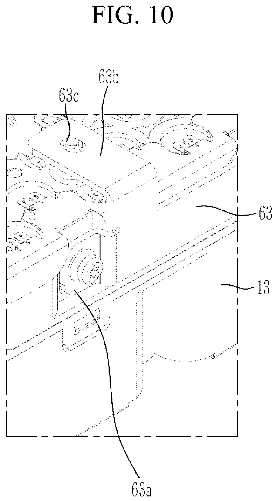

FIG. 9 is a schematic perspective view illustrating a state in which the second busbar 63 is connected to the fourth connection tab 53 according to an example embodiment. FIG. 10 is a perspective view of a main part schematically illustrating a state in which the second busbar in FIG. 2 is coupled to the second holder.

As shown in FIG. 9 and FIG. 10, the second busbar 63 may extend in the first direction from the side surface of the second holder 13, and a bent portion 63a may be inserted into the second insertion groove 13b of the second holder 13 and may be formed on a portion of the surface.

The bent portion 63a may be inserted into the second insertion groove 13b by bending a portion of the second busbar 63 in the second direction (y-axis direction) that is perpendicular to the first direction.

In the bent portion 63a, while inserted into the second insertion groove 13b, a second fastening hole 63d that communicates with the second fixing hole 53d may be formed in the fourth connection tab 53.

A fastening member such as a bolt member may be inserted into the first fixing hole 51d and the second fastening hole 63d and may be fixed to the second holder 13, and thus the second busbar 63 may be fixed to the second holder 13 while being electrically connected to the fourth connection tab 53.

In other words, the fastening member may be fastened to the second holder 13 while passing through the first fastening hole 51d and the second fastening hole 63d and thus the second busbar 63 may be stably fixed to the side surface of the second holder 13.

Since the first fixing hole 51d and the second fastening hole 63d may have a slit shape at the fourth connection tab 53 and the bent portion 63a, respectively, the position where the second busbar 63 is fixed to the side surface of the second holder 13 may be adjusted and thus it is possible to more stably install the second busbar 63.

In this second busbar 63, the second connection protrusion 63b, which may be extended upward and electrically connected to the BMS circuit 90 may be protruded from one edge of the second holder 13.

One side of the second connection protrusion 63b may be electrically connected to the edge of the second busbar 63, and the other side may extend to the upper portion of the second holder 13 and be electrically connected to the BMS circuit 90. A stable electrical connection between the second busbar 63 and BMS circuit 90 is reached.

As described above, since the busbar 60 may include the first busbar 61 connecting the third connection tab 51 and the BMS circuit 90 and the second busbar 63 connecting the fourth connection tab 53 and the BMS circuit 90, the plurality of unit battery cells 20 accommodated in the holder 10 may be stably electrically connected to each other and stably connected to the BMS circuit 90.

Meanwhile, a plurality of first support portions 70 may protrude on the upper portion of the second holder 13 and may support the BMS circuit 90, and a plurality of second support portions 80 may protrude on the upper portion of the second holder 13 and support the BMS circuit 90 while being connected to the second connection protrusion 63b of the second busbar 63. The plurality of first support portions 70 may protrude to the second holder 13 and support the BMS circuit 90 while being spaced apart from the second holder 13.

Since the plurality of first support portions 70 may protrude with the same length on the upper portion of the second holder 13, the BMS circuit 90 may be supported in a state of being appropriately separated at the upper portion of the second holder 13.

The plurality of second support portions 80 may include a fastening member 81 passing through the second connection protrusion 63b of the second busbar 63 and fixed to the second holder 13, and a fixing portion 83 supporting the BMS circuit 90. The fastening member 81 may be installed to be fixed to the second holder 13 to penetrate the BMS circuit 90 in a width direction.

The fastening member 81 may fasten the second connection protrusion 63b of the second busbar 63 and a support plate 83a, which forms the fixing portion 83 and will be described later, to each other.

The fixing portion 83 may include the support plate 83a in which an insertion hole through which the fastening member 81 passes is formed, and a plurality of insertion protrusions 83b may protrude at edges of the support plate 83a and may be inserted into and fixed to the BMS circuit 90. The support plate 83a may be on the upper surface of the second holder 13, and the plurality of insertion protrusions 83b may protrude at the edge.

The insertion protrusion 83b may protrude on the edge of the support plate 83a and may be inserted and fixed into the BMS circuit 90, and thus it may protrude on the support plate 83a to fix the BMS circuit 90 in the position on the upper portion of the second holder 13.

In this way, the plurality of first support portions 70 and the fixing portion 83 may be installed on the upper portion of the second holder 13 to support the BMS circuit 90, thereby enabling stable fixation of the BMS circuit 90.

As described above, the rechargeable battery pack 100 of the present embodiment may electrically connect the third connection tabs 51 and the fourth connection tab 53 and the busbar 60 at the side position of the holder 10 and may connect the busbar 60 and the BMS circuit 90 at the upper position of the holder 10 such that stable connection of the electrical connection portions is possible, thereby improving durability.

While this invention has been described in connection with what is presently considered to be practical embodiments, it is to be understood that the invention is not limited to the disclosed embodiments. On the contrary, it is intended to cover various modifications included within the scope of the appended claims.

Example embodiments have been disclosed herein, and although specific terms are employed, they are used and are to be interpreted in a generic and descriptive sense only and not for the purpose of limitation. In some instances, as would be apparent to one of ordinary skill in the art as of the filing of the present application, features, characteristics, and/or elements described in connection with a particular embodiment may be used singly or in combination with features, characteristics, and/or elements described in connection with other embodiments unless otherwise specifically indicated. Accordingly, it will be understood by those of skill in the art that various changes in form and details may be made without departing from the scope of the present invention as set forth in the following claims.

## Claims

1. A rechargeable battery pack (100), comprising:
a holder (10) with a plurality of accommodation spaces (11a, 13a) formed inside;
a plurality of unit battery cells (20) inserted into the plurality of accommodation spaces (11a, 13a);
a battery connection tab (30, 40) that electrically connects the plurality of unit battery cells (20) in the holder (10);
a plurality of busbar connection tabs (50; 51, 53) that are coupled to upper and lower edges of the holder (10) and are electrically connected to a portion of the plurality of unit battery cells (20), and include a fixing piece (51c, 53c) protruded from and bent to a side surface of the holder (10);
a busbar (60) that is electrically connected to the fixing piece (51c, 53c) of the busbar connection tab (50) and including a connection protrusion (61b, 63b) that extends while being curved to an upper portion of the holder (10); and
a BMS circuit (90) installed in the upper portion of the holder (10) and electrically connected to the connection protrusion (61b, 63b).

2. The rechargeable battery pack (100) of claim 1, wherein the battery connection tab (30, 40) comprises:
a plurality of first connection tabs (30) that electrically connect lower portions of the plurality of unit battery cells (20) at a lower portion of the holder (10); and
a plurality of second connection tabs (40) that electrically connect upper portions of the plurality of unit battery cells (20) at the upper portion of the holder (10).

3. The rechargeable battery pack (100) of claim 2, wherein the holder (10) comprises:
a first holder (11) in which a plurality of first accommodation spaces (11a) accommodating a part of the unit battery cell (20) are formed, and wherein the first connection tab (30) is installed at a bottom of the first holder (11); and
a second holder (13) installed in the upper portion of the first holder (11), and in which a plurality of second accommodation spaces (13a) accommodating the other portion of the unit battery cell (20) are formed and wherein the second connection tab (40) is installed on an upper portion of the second holder (13).

4. The rechargeable battery pack (100) of claim 3, wherein a plurality of first insertion grooves (1 1b) into which respective fixing pieces (51c) of the busbar connection tab (50) are inserted and fixed is formed on a side surface of the first holder (11), the plurality of first insertion grooves (11b) being formed along a first direction on the side surface of the first holder (11); and/or
a plurality of second insertion grooves (13b) into which respective fixing pieces (53c) of the busbar connection tab (50) is inserted and fixed are formed on a side surface of the second holder (13), and the plurality of second insertion grooves (13b) are formed in plurality along the first direction on the side surface of the second holder (13).

5. The rechargeable battery pack (100) of one of the claims 3 to 4, wherein the first connection tab (30) comprises:
a plurality of first tab plates (31) at the bottom of the first holder (11); and
a plurality of first tab protrusions (33) that protrude at the edge of the first tab plate (31) and electrically connect to the unit battery cell (20), and
the second connection tab (40) comprises:
a plurality of second tab plates (41) above the second holder (13); and
a plurality of second tab protrusions (43) which protrude at the edge of the second tab plate (41) and electrically connect to the unit battery cell (20).

6. The rechargeable battery pack (100) of one of the claims 3 to 5, wherein the busbar connection tab (50) comprises:
a third connection tab (51) that is electrically connected to the plurality of unit battery cells (20) at a lower edge of the first holder (11), and partially extends and is electrically connected to the BMS circuit (90); and
a fourth connection tab (53) that is electrically connected to the plurality of unit battery cells (20) at an upper edge of the second holder (13), and partially extends and is electrically connected to the BMS circuit (90).

7. The rechargeable battery pack (100) of claim 6, wherein the third connection tab (51) comprises:
a third tab plate (51a) on the lower edge of the first holder (11);
a plurality of third tab protrusions (51b) which protrude on one edge of the third tab plate (51a) and electrically connect to the unit battery cell (20); and
a first fixing piece (51c) that is bent from the other edges of the plurality of third tab plates (51a) to the side surface direction of the first holder (11) and is inserted into the plurality of the first insertion grooves (11b) to form a first fixing hole (51d) fixed by a fastening member (81), and
a first guiding piece (51e) that is in surface contact with the side surface of the first holder (11) and which protrudes from one edge of the third plate; and/or
wherein the fourth connection tab (53) comprises:
a fourth tab plate (53a) on an upper edge of the second holder (13);
a plurality of fourth tab protrusions (53b) which protrude on one edge of the fourth tab plate (53a) and electrically connect to the unit battery cell (20);
a second fixing piece (53c) that is bent from the other edge of the fourth tab plate (53a) to the side surface direction of the second holder (13) and which is inserted into the plurality of the second insertion grooves (13b) to form a second fixing hole (53d) fixed by a fastening member (81), and
a second guiding piece (53e) that is in surface contact with the side surface of the first holder (11) and which protrudes from one edge of the fourth tab plate (53a).

8. The rechargeable battery pack (100) of one of the claims 6 to 7, wherein the busbar (60) comprises:
a first busbar (61) electrically connecting the third connection tab (51) and the BMS circuit (90); and
a second busbar (63) electrically connecting the fourth connection tab (53) and the BMS circuit (90).

9. The rechargeable battery pack (100) of claim 8, wherein the first busbar (61) includes a curved extension portion (61a) extending in the first direction at the side surface of the first holder (11) and which is inserted into the plurality of first insertion grooves (1 1b) of the first holder (11) and formed in a part of the first busbar (61).

10. The rechargeable battery pack (100) of claim 9, wherein a first fastening hole (61c) that communicates with the first fixing hole (5 1d) is fixed to the first holder (11) with a fastening member (81) and is formed in the curved extension portion (61a).

11. The rechargeable battery pack (100) of one of the claims 8 to 10, wherein the second busbar (63) includes a bent portion (63a) that extends in the first direction from the side surface of the second holder (13), which is inserted into the second insertion groove (13b) of the second holder (13) and formed in a part of the surface of the second busbar (63).

12. The rechargeable battery pack (100) of claim 11, wherein a second fastening hole (63d) through which a fastening member (81) is fixed to the second holder (13) communicates with the second fixing hole (53d) of the fourth connection tab (53) while the fourth connection tab (53) is inserted into the second insertion groove (13b), and the second fastening hole (63d) is formed in the bent portion (63a).

13. The rechargeable battery pack (100) of one of the claims, wherein a first connection protrusion (61b) extends upward of the second holder (13), is electrically connected to the BMS circuit (90) and protrudes from one edge of the first busbar (61); and/or
a second connection protrusion (63b) extends upward of the second holder (13), is electrically connected to the BMS circuit (90) and protrudes from one edge of the second busbar (63).

14. The rechargeable battery pack (100) of claim 13, further comprising:
a plurality of first support portions (70) that protrude from the upper portion of the second holder (13) and support the BMS circuit (90); and
a plurality of second support portions (80) that protrude on the upper portion of the second holder (13) and support the BMS circuit (90) while being connected to the second connection protrusion (63b) of the second busbar (63), wherein the plurality of first support portions (70) protrude to the second holder (13) and support the BMS circuit (90) at a distance from the second holder (13).

15. The rechargeable battery pack (100) of claim 14, wherein the second support portions (80) comprise:
a fastening member (81) that passes through the BMS circuit (90) and is fixed to the holder (10); and
a fixing portion (83) including a support plate (83a) in which an insertion hole (51d) into which the fastening member (81) is inserted is formed, and a plurality of insertion protrusions (83b) which protrude at the edge of the support plate (83a) and are inserted and fixed into the BMS circuit (90), wherein the fastening member (81) passes through the second connection protrusion (63b) of the second busbar (63) and is fastened to the second holder (13).
